Europäisches Patentamt

European Patent Office

Office européen des brevets

(11) Publication number: **0 216 534**
**B1**

(12) **EUROPEAN PATENT SPECIFICATION**

(45) Date of publication of patent specification: **20.12.89**

(21) Application number: **86306685.8**

(22) Date of filing: **29.08.86**

(51) Int. Cl.⁴: **F 16 D 65/12**

(54) ·Improvements relating to wheel mounted discs.

(30) Priority: **03.09.85 GB 8521805**

(43) Date of publication of application:
**01.04.87 Bulletin 87/14**

(45) Publication of the grant of the patent:
**20.12.89 Bulletin 89/51**

(84) Designated Contracting States:
**DE FR GB IT**

(56) References cited:
**EP-A-0 159 639**
**DE-A-2 362 904**
**DE-B-1 175 721**
**DE-B-1 258 444**
**GB-A-1 359 388**
**GB-A-1 478 696**
**GB-A-1 526 204**
**GB-A-1 528 126**

(73) Proprietor: **LUCAS INDUSTRIES public limited company**
**Kings Road**
**Tyseley Birmingham B11 2AH (GB)**

(72) Inventor: **Watson, John Campbell**
**6 Snabs Lane Ness**
**South Wirral Cheshire (GB)**

(74) Representative: **Stringer, David Hiram et al**
**W.P. THOMPSON & CO Coopers Building Church Street**
**Liverpool L1 3AB (GB)**

Courier Press, Leamington Spa, England.

## Description

The present invention relates to a wheel incorporating a braking disc.

In particular the present invention relates to a wheel comprising a central hub and an outer rim, the hub and rim being interconnected by a web, with an annular braking disc secured to each side of the web. The braking disc may be a complete continuous annulus or composed of two or more curved segments. In certain wheels, especially railway vehicle wheels, high duty braking discs are required to cater for the braking of very large masses from high speeds. Certain such known braking discs are provided with a series of spaced apart holes through which bolts extend to secure the discs to the web of a wheel. However, as a result of the large amount of heat generated in the braking discs under braking, differential expansion causes large internal stresses to be set up around the bolt holes, and as a result surface cracking can and does occur. Clearly this is undesirable as it reduces the life of the braking disc.

In GB—A—1528126 a wheel having a central hub and an outer rim interconnected by an annular web, is disclosed, the wheel having an annular braking disc secured against each face of the web. Each annular braking disc comprises two curved segments each of which is secured to the web by the radially outer edge of a segment engaging behind radially inwardly projecting lugs integrally provided on the outer rim of the wheel, and by the radially inner edge of the segment being rigidly bolted to the web.

In GB—A—1359388 a sheet having a central hub and an outer rim interconnected by an annular web, is also disclosed, the wheel having an annular braking disc secured against each face of the web. Each annular braking disc comprises two curved segments each of which is secured to the web by bolts passing through the segment and into the web. The segments are aligned with respect to each other by pins which extend into aligned bores in the facing end surfaces of the curved segments.

The aim of the present invention is to provide a wheel wherein the braking discs are secured without the need for holes in the braking surfaces of the discs or disc segments, whilst accommodating thermal expansion without the occurrence of internal stresses at a detrimental level.

According to the present invention there is provided a wheel comprising a central hub and an outer rim interconnected by a web, with an annular braking disc mounted on each side of the web, each disc comprising at least two curved segments, each segment being secured to the web by at least one gripping member which is secured to the web and which grips the outer circumferential edge of the disc segment, and at least one retaining connection, characterised in that the or each gripping member grips the outer circumferential edge of a disc segment via an intermediate member, and in that at least one resilient retaining connection is provided at each end of each of the disc segments, the resilient retaining connections each engaging both the web and a surface provided on an end region of a disc segment.

In a preferred embodiment of the present invention the web has two parallel planar surfaces and each braking disc comprises two semi-circular segments. Each segment is secured to the web by a single gripping member which engages the middle region of the outer circumferential edge of the segment, and two resilient retaining connections at each end of the segment. Alternatively two or more gripping members may be provided at spaced apart locations on the outer edge of each segment and an alternative number of resilient retaining connections may be used.

The gripping member is generally hook-shaped and is bolted to the web with its hook-shaped end firmly against the outer rim of the wheel. The hook-shaped end forms an elongate recess which extends generally circumferentially of the wheel and an elongate intermediate member is engaged in this recess and in a recess provided in the outer periphery of the disc segment. Preferably the intermediate member is cylindrical and said recesses are complementarily shaped. However, any cross-sectional shape of elongate intermediate member can be substituted provided it can engage in suitably shaped recesses on the periphery of the disc segments and in the hook-shaped end region of the gripping member. By virtue of the gripping member engaging the outer rim of the wheel, the bolt(s) securing the gripping member to the web are free of any radial forces due to wheel rotation or shock loading. Further, the line of reaction between the disc, the intermediate member and the gripping member, preferably passes through the interface between the gripping member and the outer rim of the wheel so that there is no tendency for the gripping member to be deformed to thus release the disc.

Each resilient retaining connection preferably comprises a roll pin which is secured in a bore extending through the web axially of the wheel, the roll pin projecting out of the bore on opposite sides of the web and preferably engaging to adjacent end edges of the disc segments on each side of the web. Each roll pin basically comprises a hollow cylindrical member made of spring steel, with a slot preferably having a wavy profile, extending axially for the full length of the pin; the slot being cut completely through the wall of the pin. The roll pins each engage a curved surface provided on the end edges of the disc segments, with an end cap being located over and extending within each end of the roll pins. The end caps on each roll pin are held in position by a bolt extending axially within the roll pin, the end caps each having an enlarged portion which extends into curved recesses provided in the end edges of the disc segments, to hold the disc segments to the web, and a tongue which extends into the end regions of the slot in each roll pin, to maintain the desired rotational position for the roll pin with respect to the end edges of the disc segments e.g. to hold the slot out of direct contact with the end edges of the disc segments.

In use, expansion of the disc segments due to the heat generated under braking, is accommodated by the resilient retaining connections at each end region of the disc segments being able to flex and the curved surfaces of the end edges of the disc segments, being able to slide over the roll pins, whilst the gripping members allow the outer periphery of the disc segments to move circumferentially relative thereto.

Referring to the preferred embodiment of the present invention described hereabove, the disc segments can be simply located and secured on the wheel by the insertion of the intermediate member and the tightening of the bolts securing the end caps on the roll pins.

The present invention will now be further described, by way of example, with reference to the accompanying drawings, in which:—

Fig. 1 is a front view of part of a preferred embodiment of the present invention;

Fig. 2 is a cross-sectional view taken along line X—X in Fig. 1; and

Fig. 3 is a cross-sectional view taken along line Y—Y in Fig. 1.

The wheel constructed according to the present invention and illustrated in the accompanying drawings comprises a central hub 1 and an outer rim 3, interconnected by a web 5 which has two generally parallel, planar faces 7. Mounted on each face 7 is an annular brake disc 9 formed by two semi-circular segments 11. Each segment 11 is secured to the web 5 by a single gripping member 13 and a pair of resilient retaining connections 15 provided at each end edge region 17 of the segment 11. More gripping members 13 and a different number of resilient retaining connections 15 can be alternatively provided.

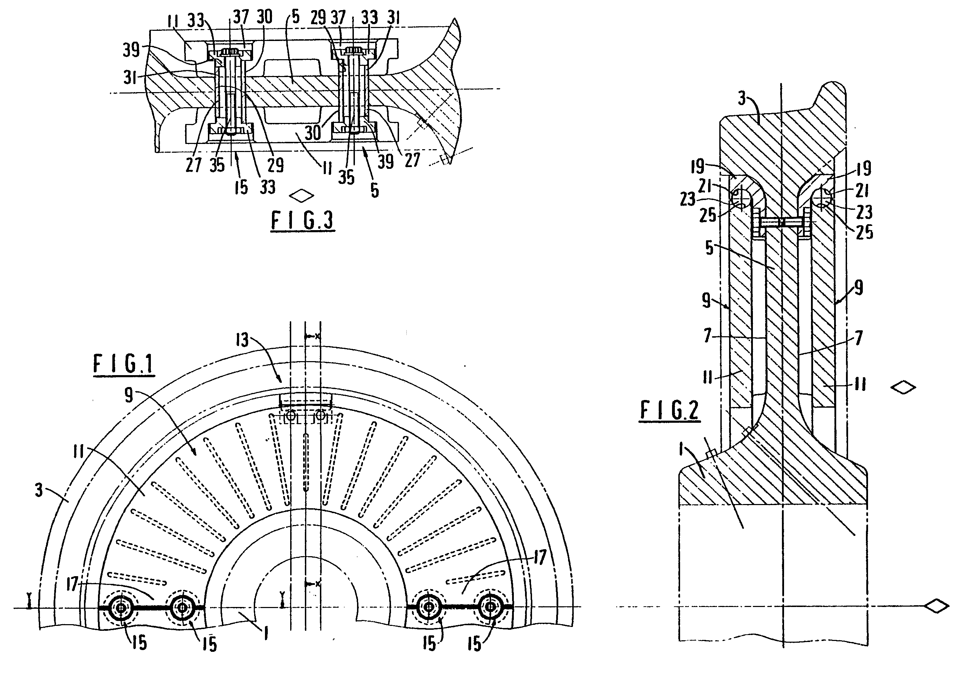

As best seen in Fig. 2 of the accompanying drawings, each gripping member 13 comprises a hook-shaped member 19 which is bolted to the web 5 so that the hook-shaped end is hard against the outer rim 3 of the wheel. In this way the bolts securing the hook-shaped member 19 to the web 5 merely hold the hook-shaped member in position, any radial forces exerted on the gripping member due to rotation of the wheel and shock loading being passed directly to the outer rim 3. The hook-shaped end defines a part cylindrical recess 21 which extends generally circumferentially of the wheel, and an elongate cylindrical intermediate member 23 is engaged both in this part cylindrical recess 21 and in a like recess 25 in the outer periphery of the disc segment 11. With this construction, insertion or removal of the intermediate member 23 can easily secure or facilitate detachment of the disc segment respectively. Whilst the recesses 21, 25 are described as being part cylindrical any profile can be used, and any desired cross-section of intermediate member can be substituted, provided they all interlock together.

Considering Fig. 2 of the accompanying drawings, whilst separate bolts are used to secure the hook-shaped members in opposite sides of the web 5, aligned gripping members as shown in Fig. 2, can be secured by common bolts which extend through the web 5.

As best seen in Fig. 3 of the accompanying drawings, each resilient retaining connection 15 comprises a roll pin 27 which is engaged through an aperture 29 in the web 5 so as to project from each side of the web 5 and engage with a curved surface 30 in an end edge 17 of the two disc segments 11 on each side of the web 5. The roll pin 27 comprises a hollow cylindrical member made of spring steel with a slot 31 cut completely through the wall of the pin and extending axially of the pin, for the full length of the pin; the slot 31 having a wavy profile. An end cap 33 is located over each end of each roll pin 27, the end caps 33 being secured to the roll pins by bolts 35 which extend axially through the roll pins. Each end cap 33 has an enlarged diameter portion in comparison with the roll pin and, in use, this enlarged diameter portion extends into a part cylindrical recess 37 provided in the end edge 17 of the disc segment 11. In this way the end edge regions 17 of the disc segments 11 are held to the web 5. Further each end cap 33 has a tongue 39 which extends into the end region of the slot 31 on the roll pin 27, to thus maintain the rotational position of the pin 27 with respect to the end edge regions of the disc segments 11; i.e. so that the slot 31 does not engage the end edge regions 17.

In use, expansion of the disc segments 11 resulting from the heat generated under braking, is allowed for by the roll pins 27 flexing and by the curved end edge regions of the disc segments 11, sliding over the roll pins 27. Further the intermediate members 23 of the gripping members allow circumferential movement of the disc segments 11 to occur.

The present invention thus provides a wheel with a braking disc mounted thereon, the disc being mounted in such a way that whilst it is positively retained, thermal expansion is allowed for and thus only minimal stresses are built up in the disc. This clearly extends the disc life and maintains required performance.

**Claims**

1. A wheel comprising a central hub (1) and an outer rim (3), interconnected by a web (5), with an annular braking disc (9) mounted on each side of the web (5), each disc (9) comprising at least two curved segments (11), each segment being secured to the web by at least one gripping member (13) which is secured to the web (5) and which grips the outer circumferential edge of the disc segment (11), and at least one retaining connection, characterised in that the or each gripping member (13) grips the outer circumferential edge of a disc segment (11) via an intermediate member (23), and in that at least one resilient retaining connection (15) is provided at each end of the disc segments (11), the resilient retaining connections (15) each engaging both the web (5) and a surface provided on an end region (17) of a disc segment (11).

2. A wheel as claimed in claim 1, wherein each braking disc (9) comprises two semi-circular segments (11), each segment (11) being secured to the web (5) by a single gripping member (13) which engages the middle region of the outer circumferential edge of the segment and two resilient retaining connections (15) at each end of the segment (11), said resilient retaining connections (15) engaging both segments (11).

3. A wheel as claimed in claim 1 or claim 2, wherein each gripping member (13) is generally hook-shaped, the hook-shaped end (19) forming an elongate recess (21) which extends generally circumferentially of the wheel with the intermediate member (23) engaged in said elongate recess (21) and in a recess (25) provided in the outer periphery of the disc segment (11).

4. A wheel as claimed in claim 3, wherein said intermediate member (21) is both elongated and cylindrical, and said recesses (21, 25) are complementarily shaped.

5. A wheel as claimed in claim 3 or 4, wherein the hook-shaped gripping member (13) is secured to the web (5) with its hook-shaped end (19) firmly against the outer rim (3) of the wheel.

6. A wheel as claimed in claim 5, wherein the line of reaction between the disc (9), the intermediate member (23) and the hook-shaped gripping member (19) passes through the interface between the hook-shaped gripping member (19) and the outer rim (13) of the wheel.

7. A wheel as claimed in any one of the preceding claims, wherein each resilient retaining connection (15) comprises a roll pin (27) which is secured in a bore (29) extending through the web (5) axially of the wheel.

8. A wheel as claimed in claim 7, wherein the roll pin (27) projects out of the bore (29) on opposite sides of the web (5) and engages two adjacent end edges (17) of the disc segments (11) on each side of the web (5).

9. A wheel as claimed in claim 7 or claim 8, wherein each roll pin (27) comprises a hollow cylindrical member made of spring steel with a slot (31) extending axially for the full length of the pin (27), completely through the wall of the pin (27).

10. A wheel as claimed in claim 9, wherein an end cap (33) is located over and extends within each end of each roll pin (27), the end caps (l33) on each roll pin (27) being held in position by a bolt (35) extending axially within the roll pin (27).

11. A wheel as claimed in claim 10, wherein the end caps (33) each have an enlarged portion which extends into a curved recess (37) provided in the end edge region (17) of the disc segments (11) to hold the segments (11) to the web (5).

12. A wheel as claimed in claim 10 or 11, wherein each end cap (33) has a tongue (39) which extends into the end region of the slot (31) in a roll pin (27).

**Patentansprüche**

1. Rad mit einer zentralen Nabe (1) und einem äußeren Radkranz (3), die miteinander durch eine Radscheibe (5) verbunden sind, an der auf beiden Seiten eine kreisringförmige Bremsscheibe (9) angeordnet ist, welche wenigstens zwei gekrümmte Segmente (11) umfaßt, von denen jedes an der Radscheibe mittels wenigstens einer Klammer (13) befestigt ist, die an der Radscheibe (5) befestigt ist und den äußeren Umfangsrand des Scheibensegments (11) hält, sowie mit wenigstens einem Halteverbinder, dadurch gekennzeichnet, daß die oder jede Klammer (13) den äußeren Umfangsrand eines Scheibensegments (11) über ein Zwischenstück (23) hält, und daß wenigstens ein elastischer Halteverbinder (15) an jedem Ende des Scheibensegments (11) vorgesehen ist, wobei die elastischen Halteverbinder (15) je sowohl an der Radscheibe (5) als auch an einer Fläche anliegen, die an einem Stirnbereich (17) eines Scheibensegments (11) vorgesehen ist.

2. Rad nach Anspruch 1, bei dem jede Bremsscheibe (9) zwei halbkreisförmige Segmente (11), von denen jedes an der Radscheibe (5) mit einer einzelnen Klammer (13) befestigt ist, die am Mittenbereich des äußeren Umfangsrandes vom Segment anliegt, und zwei elastische Halteverbinder (15) an jedem Ende des Segments (11) umfaßt, wobei die elastischen Halteverbinder (15) an beiden Segmenten (11) angreifen.

3. Rad nach Anspruch 1 oder 2, bei dem jede Klammer (13) im wesentlichen hakenförmig ist, wobei das hakenförmige Endstück (19) eine Vertiefung (21) von überwiegender Längserstreckung bildet, welche sich im wesentlichen in Umfangsrichtung des Rades erstreckt, dabei das Zwischenstück (23) in der langen Vertiefung (21) und in einer im Außenumfang des Scheibensegments (11) ausgebildeten Vertiefung (25) angeordnet ist.

4. Rad nach Anspruch 3, bei dem das Zwischenstück (21) sowohl von überwiegender Längserstreckung als auch zylindrisch ist und die Vertiefungen (21, 25) von komplementärer Gestalt sind.

5. Rad nach Anspruch 3 oder 4, bei dem die hakenförmige Klammer (13) an der Radscheibe (5) so befestigt ist, daß ihr hakenförmiges Endstück (19) fest am äußeren Radkranz (3) des Rades anliegt.

6. Rad nach Anspruch 5, bei dem die Reaktionslinie zwischen der Scheibe (9), dem Zwischenstück (23) und der hakenförmigen Klammer (19) durch die Berührungsfläche zwischen der hakenförmigen Klammer (19) und dem äußeren Radkranz (13) des Rades geht.

7. Rad nach einem der vorhergehenden Ansprüche, bei dem jeder elastische Halteverbinder (15) einen Schwerspannstift (27) umfaßt, der in einer die Radscheibe (5) in der Richtung der Radachse durchsetzenden Bohrung (29) befestigt ist.

8. Rad nach Anspruch 7, bei dem der Schwerspannstift (27) auf entgegengesetzten Seiten der Radscheibe (5) aus der Bohrung (29) herausragt und an zwei benachbarten Stirnrändern (17) der Scheibensegmente (11) auf jeder Seite der Radscheibe (5) anliegt.

9. Rad nach Anspruch 7 oder 8, bei dem jeder Schwerspannstift (27) ein hohles zylindrisches Bauteil aus Federstahl mit einem Schlitz (31) umfaßt, der sich axial über die gesamte Länge des Stiftes (27) erstreckt, dabei die Wand des Stiftes (27) vollständig durchsetzt.

10. Rad nach Anspruch 9, bei dem auf jedem Ende jedes Schwerspannstiftes (27) in es eindringend eine Endkappe (33) angeordnet ist, wobei die Endkappen (33) auf jedem Schwerspannstift (27) von einem im Schwerspannstift (27) sich axial erstreckenden Bolzen (35) in Stellung gehalten ist.

11. Rad nach Anspruch 10, bei dem die Endkappen (33) je einen vergrößerten Abschnitt aufweisen, der in eine gekrümmte Vertiefung (37) im Stirnrandbereich (17) der Scheibensegmente (11) hineinragt, derart, daß die Segmente (11) an der Radscheibe (5) gehalten sind.

12. Rad nach Anspruch 10 oder 11, bei dem jede Endkappe (33) einen Ansatz (39) aufweist, der in den Endbereich des Schlitzes (31) in einem Schwerspannstift (27) hineinragt.

## Revendications

1. Roue comportant un moyeu central (1) et une jante extérieure (3), qui sont interconnectés par un flasque (5), sur chaque côté duquel est monté un disque de frein annulaire (9), chaque disque (9) comportant au moins deux segments courbes (11), dont chacun est fixé au flasque par au moins un élément d'accrochage (13) fixé au flasque (5) et saisissant le bord circonférentiel du segment (11) du disque, et au moins une connexion de retenue, caractérisée en ce que le ou chaque élément d'accrochage (13) saisit le bord circonférentiel extérieur d'un segment (11) du disque au moyen d'un élément intermédiaire (23), et en ce qu'au moins une connexion élastique de retenue (15) est prévue à chaque extrémité des segments (11) du disque, les connexions élastiques de retenue (15) s'appliquant chacune à la fois contre le flasque (5) et contre une surface situé sur une zone d'extrémité (17) d'un segment (11) du disque.

2. Roue selon la revendication 1, dans laquelle chaque disque de frein (9) comporte deux segments semi-circulaires (11), dont chacun est fixé au flasque (5) par un seul élément d'accrochage (13) qui s'applique contre la zone médiane du bord circonférentiel extérieur du segment, et deux connexions élastiques de retenue (15) prévues aux extrémités du segment (11), lesdites connexions élastiques de retenue (15) s'appliquant contre les deux segments (11).

3. Roue selon la revendication 1 ou 2, dans laquelle chaque élément d'accrochage (13) possède la forme générale d'un crochet, l'extrémité (19) en forme de crochet formant un renforcement allongé (21) qui s'étend d'une manière générale sur la circonférence de la roue, l'élément intermédiaire (23) étant engagé dans ledit renforcement allongé (21) et dans un renforcement (25) ménagé dans le pourtour extérieur du segment (11) du disque.

4. Roue selon la revendication 3, dans laquelle ledit élément intermédiaire (21) possède une forme à la fois allongée cylindrique et lesdits renforcements (21, 25) possèdent des formes complémentaires.

5. Roue selon la revendication 3 ou 4, dans laquelle l'élément d'accrochage en forme de crochet (13) est fixé au flasque (5) avec son extrémité en forme de crochet (19) appliquée fermement contre la jante extérieure (13) de la roue.

6. Roue selon la revendication 5, dans laquelle la ligne de réaction entre le disque (9), l'élément intermédiaire (23) et l'élément d'accrochage en forme de crochet (19) passe par l'interface entre l'organe d'accrochage en forme de crochet (19) et la jante extérieure (13) de la roue.

7. Roue selon l'une quelconque des revendications précédentes, dans laquelle chaque connexion élastique de retenue (15) comporte un manchon (27) fixé dans un alésage (29) traversant le flasque (5) dans la direction axiale de la roue.

8. Roue selon la revendication 7, dans laquelle le manchon (27) fait saillie hors de l'alésage (29) sur des côtés opposés du flasque (5) et s'applique contre deux bords terminaux voisins (17) des segments (11) du disque, de chaque côté du flasque (5).

9. Roue selon la revendication 7 ou 8, dans laquelle chaque manchon (27) comporte un élément cylindrique creux réalisé en acier à ressort et comportant une fente (31) s'étendant axialement sur toute la longueur du manchon (27) en traversant complètement la paroi du manchon (27).

10. Roue selon la revendication 9, dans laquelle un capuchon d'extrémité (33) est disposé au-dessus et s'étend à l'intérieur de chaque extrémité de chaque manchon (27), les capuchons d'extrémité (33) situés sur chaque manchon (27) étant maintenus en position par un boulon (35) qui s'étend axialement à l'intérieur du manchon (27).

11. Roue selon la revendication 10, dans laquelle les capuchons d'extrémité (33) possèdent chacun une partie élargie qui s'étend dans un renforcement courbe (37) ménagé dans la zone marginale d'extrémité (17) des segments (11) du disque de manière à maintenir les segments (11) sur le flasque (5).

12. Roue selon la revendication 10 ou 11, dans laquelle chaque capuchon d'extrémité (33) possède une languette (39) qui pénètre dans la zone d'extrémité de la fente (31) ménagée dans un manchon (27).

EP 0 216 534 B1

FIG.2

FIG.3

FIG.1

1